(19) Europäisches Patentamt
European Patent Office
Office européen des brevets

(11) **EP 2 226 631 B1**

(12) **EUROPEAN PATENT SPECIFICATION**

(45) Date of publication and mention
of the grant of the patent:
**26.10.2011 Bulletin 2011/43**

(51) Int Cl.:
**G01N 30/88** *(2006.01)*   **G01N 27/62** *(2006.01)*
**G01N 30/06** *(2006.01)*   **G01N 30/72** *(2006.01)*
**C07C 29/74** *(2006.01)*   **G01N 1/40** *(2006.01)*

(21) Application number: **08865672.3**

(22) Date of filing: **17.12.2008**

(86) International application number:
**PCT/JP2008/073010**

(87) International publication number:
**WO 2009/081822 (02.07.2009 Gazette 2009/27)**

(54) **METHOD FOR ANALYSIS OF LOW-MOLECULAR-WEIGHT ORGANIC COMPOUND HAVING 20 OR LESS CARBON ATOMS IN WATER- AND OIL-REPELLENT COMPOSITION**

VERFAHREN ZUR UNTERSUCHUNG EINER NIEDERMOLEKULAREN ORGANISCHEN VERBINDUNG MIT 20 ODER WENIGER KOHLENSTOFFATOMEN IN EINER WASSER- UND ÖLABWEISENDEN ZUSAMMENSETZUNG

PROCÉDÉ D'ANALYSE D'UN COMPOSÉ ORGANIQUE DE MASSE MOLÉCULAIRE FAIBLE, AYANT 20 ATOMES DE CARBONE OU MOINS, DANS UNE COMPOSITION HYDROFUGE ET OLÉOFUGE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **26.12.2007  JP 2007333564**

(43) Date of publication of application:
**08.09.2010 Bulletin 2010/36**

(73) Proprietor: **Asahi Glass Company, Limited**
**Chiyoda-ku**
**Tokyo 100-8405 (JP)**

(72) Inventor: **HIKIMA, Satoshi**
**Tokyo 100-8405 (JP)**

(74) Representative: **Müller-Boré & Partner**
**Patentanwälte**
**Grafinger Straße 2**
**81671 München (DE)**

(56) References cited:
**JP-A- 2007 247 096     US-A- 4 990 458**

• **MAWN M P ET AL: "Determination of extractable perfluorooctanoic acid (PFOA) in water, sweat simulant, saliva simulant, and methanol from textile and carpet samples by LC/MS/MS", ANALYST, ROYAL SOCIETY OF CHEMISTRY, GB, vol. 130, 22 March 2005 (2005-03-22), pages 670-678, XP002546464, ISSN: 0003-2654, DOI: DOI:10.1039/B414403A [retrieved on 2005-03-22]**
• **MARTA VILLAGRASA ET AL: "Environmental analysis of fluorinated alkyl substances by liquid chromatography-(tandem) mass spectrometry: a review", ANALYTICAL AND BIOANALYTICAL CHEMISTRY, SPRINGER, BERLIN, DE, vol. 386, no. 4, 19 May 2006 (2006-05-19), pages 953-972, XP019441085, ISSN: 1618-2650, DOI: DOI: 10.1007/S00216-006-0471-9**
• **KATSUMATA T. ET AL.: 'Chorinkai Ryutai Chushutsu - Kosoku Ekitai Chromatography/ Tandem Shitsuryo Bunsekiho ni yoru House Dust Chu Perfluoro Kagobutsu no Teiryo' BUNSEKI KAGAKU vol. 55, no. 12, 05 December 2006, pages 955 - 960**
• **YAMANAKA M. ET AL.: 'Perfluoroalkyl Group o Yusuru Teibunshi Gelling Agent Keisei suru Sen'ijo Kaigotai to sono Riyo' DAI 56 KAI KOBUNSHI TORONKAI YOKOSHU 04 September 2007, pages 3218 - 3219**

EP 2 226 631 B1

**(Cont. next page)**

- **NAKATA H. ET AL.: 'Online Koso Chushutsu - Kosoku Ekitai Chromatograph/Tandem Shitsuryo Bunsekikei o Mochiiru Hito Kesshochu Yuki Fussokei Kagobutsu no Issei Bunseki Hoho no Kaihatsu' BUNSEKI KAGAKU vol. 54, no. 9, 05 September 2005, pages 877 - 884**
- **YOSHIDA K.: 'WakopakO o Shiyo shita Perfluoro Kagobutsu no LC/MS/MS Bunseki' WAKO JUN'YAKU JIHO vol. 75, no. 4, 20 October 2007, page 12**

- **HIKIMA S. ET AL.: 'Taikichu Perfluoro Carboxylic Acid no Kyushueki Sampling/LC-MS Bunsekiho no Kaihatsu' DAI 68 KAI BUNSEKI KAGAKU TORONKAI KOEN YOSHISHU 05 May 2007, page 208, XP008136888**

**Description**

TECHNICAL FIELD

The present invention relates to a process for analyzing a low molecular weight organic compound having at most 20 carbon atoms in a water/oil repellent composition.

BACKGROUND ART

It has been common practice to treat an article (such as a fiber product or a paper product) with a water/oil repellent containing a fluorinated polymer having repeating units based on a compound having a perfluoroalkyl group, to impart water/oil repellency to the surface of the article.

Recently, it has been found that perfluorooctanoic acid (hereinafter referred to as PFOA) or perfluorooctane sulfonic acid (hereinafter referred to as PFOS) is detected in a natural or living environment (such as in bloods of wild animals or humans, or in rivers), and there has been a concern about its risks (e.g. Non-Patent Documents 1 and 2). Currently, evaluation of risks is being carried out primarily by EPA of USA with respect to PFOA and PFOS. However, no conclusion has been available at present.

On the other hand, as precursors which may form PFOA by e.g. biodegradation, (perfluorooctyl)ethyl alcohol, (perfluorooctyl)ethyl iodide, (perfluorooctyl)ethene and perfluorooctyl iodide (hereinafter they may be generally referred to as PFOA precursors) may be mentioned. Also with respect to the PFOA precursors, there has been a concern about their risks similarly.

It has been known that PFOA, PFOS and PFOA precursors may sometimes be contained in the above-mentioned water/oil repellent composition in a trace amount as unintended impurities. Therefore, a water/oil repellent composition free from PFOA, PFOS and PFOA precursors, has been developed and accordingly, it has been desired to establish a process for analyzing PFOA, PFOS and PFOA precursors in the water/oil repellent composition.

As such a process for analysis, for example, a process for measuring the concentrations of PFOA and PFOS in a water/oil repellent composition by using a liquid chromatograph-mass spectrometer has been proposed (Patent Document 1). However, if the water/oil repellent composition is supplied to the liquid chromatograph-mass spectrometer as it is, a fluorinated polymer causes clogging of a column of the liquid chromatograph, whereby separation of each component in the water/oil repellent composition by the liquid chromatograph will not proceed well. Therefore, problems such as large fluctuation in concentration at every measurement and difficulty in measurement itself may happen.

Non-Patent Document 1: Hisao Nakata et al., "development of simultaneous analyses of organic fluoro compounds in human blood plasma by means of online solid phase extraction-high performance liquid chromatography/tandem mass spectrometer", Analytical Chemistry, Japan Society for Analytical Chemistry, 2005, vol. 54, No. 9, p-877-884
Non-Patent Document 2: Nobutsune Katsumata et al., "Quantitative analysis of perfluoro compounds in house dust by means of super critical fluid-high performance liquid chromatography/tandem mass spectrometry", analytical chemistry, Japan Society for Analytical Chemistry, 2006, vol. 55, No. 12, p. 955-961
Patent Document 1: JP-A-2007-247096

Patent document US 4,990,458 relates to the formation of derivatives of organic compounds and, more particularly, to such derivatization carried out as a step during highly sensitive analysis or determination of various organic compounds available in very dilute aqueous solutions. US 4,990,458 discloses a process for converting an organic compound (such as carboxylic acids) into a derivative suitable for analysis, said process comprising in particular reacting said organic compound with a derivatizing agent such as alcohol.

"Environmental analysis of fluorinated alkyl substances by liquid chromatography-(tandem) mass spectrometry: a review" (Marta Villagrasa, Analytical and Bioanalytical Chemistry, vol. 386 no. 4 pages 953 - 972) discloses a process for analyzing fluorinated alkyl substance (e.g. perfluorooctanic acid, perfluorocarboxylic acid) by liquid-chromatography-mass spectrometry.

"Determination of extractable perfluorooctanoic acid (PFOA) in water, sweat simulant, saliva simulant, and methanol from textile and carpet samples by LC/MS/MS" (Mawn, Analyst, vol. 130 pages 670 - 678) discloses methods for quantitatively analyzing perfluorooctanic acid (PFOA, which is a low molecular weight organic compound having at most 20 carbon atoms) in methanol sample extracts. In particular, LC/MS is used.

DISCLOSURE OF THE INVENTION

OBJECT TO BE ACCOMPLISHED BY THE INVENTION

The present invention is to provide a process whereby a low molecular weight organic compound having at most 20 carbon atoms present in a trace amount in a water/oil repellent composition can be analyzed accurately.

MEANS TO ACCOMPLISH THE OBJECT

The process for analyzing a low molecular weight organic compound having at most 20 carbon atoms of the present invention comprises following steps:

(a) a step of mixing a water/oil repellent composition in which a fluorinated polymer having repeating units based on a compound having a perfluoroalkyl group is dispersed or dissolved in a medium, and a $C_{1-5}$ alcohol, and agglomerating the fluorinated polymer to obtain a liquid containing agglomerates of the fluorinated polymer,
(b) a step of subjecting the liquid containing the agglomerates of the fluorinated polymer to solid-liquid separation to obtain a liquid phase, and
(c) a step of measuring the concentration of a low molecular weight organic compound having at most 20 carbon atoms in the liquid phase by means of a liquid chromatograph-mass spectrometer (hereinafter referred to as LC-MS), a liquid chromatograph-tandem mass spectrometer (hereinafter referred to as LC-MS/MS) or a gas chromatograph-mass spectrometer (hereinafter referred to GC-MS).

In a case where the fluorinated polymer has repeating units based on a compound having a basic group additionally, the above step (a) is the following step (a'):

(a') a step of mixing a water/oil repellent composition in which a fluorinated polymer having repeating units based on a compound having a perfluoroalkyl group and repeating units based on a compound having a basic group is dispersed or dissolved in a medium, a $C_{1-5}$ alcohol, and a basic compound, and agglomerating the fluorinated polymer to obtain a liquid containing agglomerates of the fluorinated polymer.

The process for analyzing a low molecular weight organic compound having at most 20 carbon atoms of the present invention is suitable for a case wherein the low molecular weight organic compound having at most 20 carbon atoms is a perfluorocarboxylic acid and/or a perfluoroalkane sulfonic acid and is more suitable for a case wherein the low molecular organic compound having at most 20 carbon atoms is PFOA and/or PFOS and/or PFOA precursors.

EFFECTS OF THE INVENTION

According to the process for analyzing a low molecular weight organic compound having at most 20 carbon atoms in a water/oil repellent composition of the present invention, it is possible to accurately analyze the low molecular weight organic compound having at most 20 carbon atoms which is present in a trace amount in a water/oil repellent composition.

BRIEF DESCRIPTION OF THE DRAWINGS

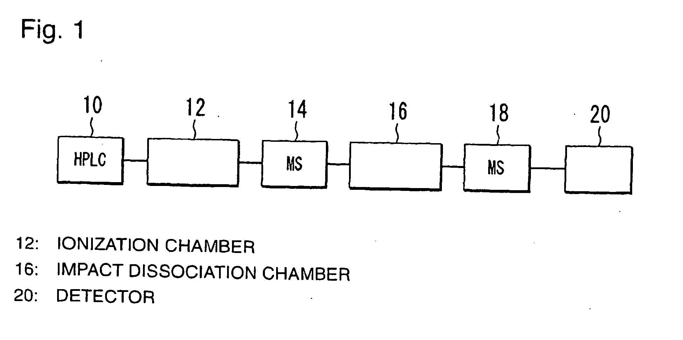

Fig. 1 is a schematic diagram illustrating one embodiment of LC-MS/MS.

MEANING OF SYMBOLS

10:    High performance liquid chromatograph (HPLC)
14:    First mass spectrometer (MS)
18:    Second mass spectrometer (MS)

BEST MODE FOR CARRYING OUT THE INVENTION

In the present specification, a compound represented by the formula (1) will be referred to as a compound (1). Compounds represented by other formulae will be referred to in the same manner.

Further, in the present specification, a (meth)acrylate means an acrylate or a methacrylate.

(Water/oil repellent composition)

The water/oil repellent composition of the present invention is a composition comprising a fluorinated polymer having repeating units based on a compound having a perfluoroalkyl group or a fluorinated polymer having repeating units based on a compound having a perfluoroalkyl group and repeating units based on a compound having a basic group, and a medium (a dispersion medium or solvent).

The perfluoroalkyl group is a group having all of hydrogen atoms in an alkyl group are substituted by fluorine atoms. The perfluoroalkyl group may have an etheric oxygen atom. Further, the perfluoroalkyl group may be bonded to an alkylene group having no fluorine atom.

The basic group is a group which can be ion-bonded to a protonic acid group. The basic group may, for example, be $-NR^1R^2$, $-N(O)R^1R^2$, $=NR$, $-NR-$, $=NH$, $-NH-$, a piperidino group, a pyrrolidinyl group or a morpholino group. Here, each of R, $R^1$ and $R^2$ which are independent of each other, is a benzyl group, a $C_{1-8}$ alkyl or alkylene group, or a $C_{2-3}$ alkyl group having some of hydrogen atoms are substituted by hydroxy groups. Each of $R^1$ and $R^2$ is preferably a $C_{1-4}$ alkyl group.

The fluorinated polymer may be a low molecular weight type or a high molecular weight type.

The low molecular weight type may, for example, be a fluorinated urethane compound or a fluorinated ester compound.

The fluorinated urethane compound is a reaction product of an alcohol having a perfluoroalkyl group with an isocyanate.

The fluorinated ester compound is a reaction product of an alcohol having a perfluoroalkyl group with a compound having an acid group (such as phosphoric acid or pyromellitic acid).

The high molecular weight type may, for example, be a fluorinated vinyl polymer. The fluorinated vinyl polymer is preferably a copolymer of a (meth)acrylate having a perfluoroalkyl group. The (meth)acrylate having a perfluoroalkyl group is preferably a (meth)acrylate having a $C_{4-16}$ perfluoroalkyl group, more preferably a (meth)acrylate having a $C_{4-6}$ perfluoroalkyl group. Specifically, $C_6F_{13}C_2H_4OCOCH=CH_2$, $C_6F_{13}C_2H_4OCOC(CH_3)=CH_2$ or $C_6F_{13}C_2H_4OCOCC1=CH_2$ may be mentioned.

As monomers to be copolymerized with the (meth)acrylate having a perfluoroalkyl group, the following monomers may be mentioned.

Vinyl chloride, vinylidene chloride, ethylene, vinylidene fluoride, vinyl acetate, vinyl propionate, vinyl isobutanoate, vinyl isodecanoate, vinyl stearate, cetyl vinyl ether, dodecyl vinyl ether, isobutyl vinyl ether, ethyl vinyl ether, 2-chloroethyl vinyl ether, styrene, a-methylstyrene, p-methytstyrene, chloromethylstyrene, methyl (meth)acrylate, butyl (meth)acrylate, 2-ethylhexyl (meth)acrylate, a (meth)acrylate having a $C_{12-24}$ alkyl group, 2-hydroxyethyl (meth)acrylate, cyclohexyl methacrylate, glycidylethyl methacrylate, 3-chloro-2-hydroxypropyl methacrylate, N-methylol (meth)acrylamide and N-butoxymethyl (meth)acrylamide.

A blocked compound of 2-isocyanatoethyl methacrylate (the blocking agent is a compound reactive with an isocyanate, such as methyl ethyl ketoxime, butanone oxime, ε-caprolactam, pyrazole, 3-methylpyrazole or 3,5-dimethylpyrazole), a hexamethylene diisocyanate adduct of 3-phenoxy-2-hydroxypropyl acrylate, N,N-dimethyl (meth)acrylamide, diacetone (meth).acrylamide, vinyl alkyl ketone, butadiene, isoprene, chloroprene, benzyl (meth)acrylate, a (meth)acrylate having polysiloxane, allyl acetate, N-vinyl carbazole, maleimide, N-methyl maleimide, (meth)acrylic acid, glycerol mono(meth)acrylate, or hydroxypropyl (meth)acrylate.

An adduct of 2-hydroxyethyl methacrylate with ε-caprolactone, polyethylene oxide di(meth)acrylate, polyethylene oxide-polypropylene oxide-polyethylene oxide di(meth)acrylate, propylene oxide diglycidylether di(meth)acrylate, tripropylene oxide diglycidyl ether di(meth)acrylate or glycerol diglycidyl ether di(meth)acrylate.

A vinyl monomer having a basic group, such as N,N-dimethylamino (meth)acrylate, N,N-diethylamino (meth)acrylate, N,N-diisopropylamino (meth)acrylate, N-morpholino (meth)acrylate, N-piperidino (meth)acrylate, N,N-dimethylaminoxide (meth)acrylate, N,N-diethylaminoxide (meth)acrylate.

A monomer having an ammonium group, such as N,N,N-trimethyl-n-(2-hydroxy-3-methacryloyloxypropyl)ammonium chloride.

The water/oil repellent composition may contain two or more fluorinated polymers, or may contain a fluorinated polymer and another polymer. For example, the water/oil repellent may contain a fluorinated vinyl polymer and a fluorinated urethane compound, or may contain a fluorinated vinyl polymer and a polysiloxane.

The medium is preferably a medium containing water as the main component, and it may, for example, be water, or a mixed liquid of water with an organic solvent. The content of water in the medium is preferably at least 30 mass%, more preferably at least 50 mass%.

The organic solvent may, for example, be dipropylene glycol or tripropylene glycol.

(Analytical process)

The analytical process is partially different between in a case where the water/oil repellent composition is water/oil repellent composition (I) in which a fluorinated polymer having repeating units based on a compound having a perfluoroalkyl group and no repeating units based on a compound having a basic group is dispersed or dissolved in a medium and in a case where the water/oil repellent composition is water/oil repellent composition (II) in which a fluorinated polymer having repeating units based on a compound having a perfluoroalkyl group and repeating units based on a compound having a basic group is dispersed or dissolved in a medium.

In the case of water/oil repellent composition (I), an analysis of organic compound having at most 20 carbon atoms in water/oil repellent composition (I) is conducted by the following Method (i), and in the case of water/oil repellent composition (II), an analysis of organic compound having at most 20 carbon atoms in the water/oil repellent composition (II) is conducted by the following Method (ii).

Method (i) comprises following steps.

(a) a step of mixing the water/oil repellent composition (I) in which a fluorinated polymer is dispersed or dissolved in a medium, and a $C_{1-5}$ alcohol, and agglomerating the fluorinated polymer to obtain a liquid containing agglomerates of the fluorinated polymer.

(b) a step of subjecting the liquid containing the agglomerates of the fluorinated polymer to solid-liquid separation to obtain a liquid phase.

(c) a step of measuring the concentration of a low molecular weight organic compound having at most 20 carbon atoms in the liquid phase by means of LC-MS, LC-MS/MS or GC-MS.

Method (ii) comprises the following steps.

(a') a step of mixing the water/oil repellent composition (II) in which a fluorinated polymer is dispersed or dissolved in a medium, a $C_{1-5}$ alcohol and a basic compound, and agglomerating the fluorinated polymer to obtain a liquid containing agglomerates of the fluorinated polymer.

(b) a step of subjecting the liquid containing the agglomerates of the fluorinated polymer to solid-liquid separation to obtain a liquid phase.

(c) a step of measuring the concentration of a low molecular weight organic compound having at most 20 carbon atoms in the liquid phase by means of LC-MS, LC-MS/MS or GC-MS.

(Method (i))

Step (a):

Step (a) is a step of agglomerating a fluorinated polymer dispersed or dissolved in the water/oil repellent composition (I), thereby to facilitate separation of a solid phase comprised of the fluorinated polymer and a liquid phase such as a medium in the subsequent step (b).

The number of carbon atoms in the alcohol is from 1 to 5, and preferably from 2 to 3. If the number of carbon atoms in the alcohol exceeds 5, the agglomeration of the fluorinated polymer becomes insufficient.

The $C_{1-5}$ alcohol may, for example, be methanol, ethanol, 1-propanol, 2-propanol, 1-butanol, 2-methyl-1-propanol, 2-butanol, 2-methyl-2-propanol, 1-pentanol, 3-methyl-1-butanol, 2-methyl-1-butanol, 2,2-dimethyl-1-propanol, 2-pentanol, 3-methyl-2-butanol, 3-pentanol or 2-methyl-2-butanol.

The amount of the alcohol is, in view of the diluting ratio of the low molecular weight organic compound having at most 20 carbon atoms, preferably from 100 to 1,000 parts by mass, more preferably from 100 to 500 parts by mass, per 100 parts by mass of the water/oil repellent composition (I).

Step (b):

Step (b) is a step of subjecting the liquid containing the agglomerates of the fluorinated polymer obtained in step (a) to solid-liquid separation thereby to collect only the liquid phase.

The method for solid-liquid separation may, for example, be the following methods (b-1) to (b-3).

(b-1) a method wherein the liquid containing the agglomerates of the fluorinated polymer is left to stand still to let the agglomerates of the fluorinated polymer be settled, whereupon the supernatant liquid (the liquid phase) is collected.

(b-2) a method wherein by means of a centrifugal separator, the liquid containing the agglomerates of the fluorinated polymer is subjected to solid-liquid separation, whereupon the supernatant liquid (the liquid phase) is collected.

(b-3) a method wherein the liquid containing the agglomerates of the fluorinated polymer is subjected to filtration treatment, whereby the filtrate (the liquid phase) is collected.

The filter to be used for the filtration treatment is preferably a polyolefin filter or a cellulose filter. A fluororesin filter is not desirable, since it may contain a perfluorocarboxylic acid used as an emulsifier. The pore diameter of the filter is preferably at most 0.2 $\mu$m.

Step (c):

Step (c) is a step of measuring the concentration of a low molecular weight organic compound having at most 20 carbon atoms in the liquid phase obtained in step (b) by means of LC-MS, LC-MS/MS or GC-MS.

In a case where the low molecular weight organic compound having at most 20 carbon atoms is a perfluorocarboxylic acid and/or a perfluoroalkane sulfonic acid, the apparatus for measuring its concentration is preferably LC-MS/MS from such a viewpoint that the specific compound can be analyzed highly selectively with high sensitivity. On the other hand, in a case where the low molecular weight organic compound having at most 20 carbon atoms is a precursor of PFOA, the apparatus for measuring its concentration is preferably GC-MS.

Fig. 1 is a schematic diagram illustrating one embodiment of LC-MS/MS. The LC-MS/MS comprises a high performance chromatograph 10 (HPLC) to separate the sample mixture (liquid phase) into the respective components, an ionizing chamber 12 to ionize the components separated by the high performance chromatograph 10, a first mass spectrometer 14 (MS) to select specific ions from ions formed in the ionizing chamber 12, a collision dissociation chamber 16 wherein argon or the like is collided with ions selected by the first mass spectrometer 14 to have the ions dissociated thereby to generate fresh ion groups, a second mass spectrometer 18 (MS) to analyze the ion groups generated in the collision dissociation chamber 16, and a detector 20.

The low molecular weight organic compound having at most 20 carbon atoms to be analyzed may be a perfluorocarboxylic acid, a perfluoroalkane sulfonic acid, a (perfluoroalkyl)ethyl alcohol, a (perfluoroalkyl)ethyl iodide, a (perfluoroalkyl)ethene or a perfluoroalkyl iodide.

As the perfluorocarboxylic acid, the compound (1) may be mentioned.

$$C_nF_{2n+1}COOH \qquad\qquad (1)$$

wherein n is an integer of at least 1, preferably from 3 to 11.

The analytical process of the present invention is suitable for a case wherein the perfluorocarboxylic acid is PFOA ($C_7F_{15}COOH$).

As the perfluoroalkane sulfonic acid, the compound (2) may be mentioned.

$$C_mF_{2m+1}SO_3H \qquad\qquad (2)$$

wherein m is an integer of at least 1, preferably from 4 to 12.

The analytical process of the present invention is suitable for a case wherein the perfluoroalkane sulfonic acid is PFOS ($C_8F_{17}SO_3H$).

As the (perfluoroalkyl)ethyl alcohol, the compound (3) may be mentioned.

$$C_mF_{2m+1}CH_2CH_2OH \qquad\qquad (3)$$

wherein m is an integer of at least 1, preferably from 4 to 12.

The analytical process of the present invention is suitable for a case wherein the (perfluoroalkyl)ethyl alcohol is (perfluorooctyl)ethyl alcohol ($C_8F_{17}CH_2CH_2OH$).

As the (perfluoroalkyl)ethyl iodide, the compound (4) may be mentioned.

$$C_mF_{2m+1}CH_2CH_2I \qquad (4)$$

wherein m is an integer of at least 1, preferably from 4 to 12.

The analytical process of the present invention is suitable for a case wherein the (perfluoroalkyl)ethyl iodide is (perfluorooctyl)ethyl iodide ($C_8F_{17}CH_2CH_2I$).

As the (perfluoroalkyl)ethene, the compound (5) may be mentioned.

$$C_mF_{2m+1}CH=CH_2 \qquad (5)$$

wherein m is an integer of at least 1, preferably from 4 to 12.

The analytical process of the present invention is suitable for a case wherein the (perfluoroalkyl)ethene is (perfluorooctyl)ethene ($C_8F_{17}CH=CH_2$).

As the perfluoroalkyl iodide, the compound (6) may be mentioned.

$$C_mF_{2m+1}I \qquad (6)$$

wherein m is an integer of at least 1, preferably from 4 to 12.

The analytical process of the present invention is suitable for a case wherein the perfluoroalkyl iodide is perfluorooctyl iodide ($C_8F_{17}I$).

(Method (ii))

Step (a'):

Step (a') is a step of subjecting the fluorinated polymer dispersed or dissolved in the water/oil repellent composition (II) to precipitation and agglomeration to facilitate separation of the solid phase comprised of the fluorinated polymer and the liquid phase such as a medium in the following step (b).

The number of carbon atoms in the alcohol is from 1 to 5, preferably from 2 to 3. If the number of carbon atoms in the alcohol exceeds 5, the agglomeration of the fluorinated polymer becomes insufficient.

As for the $C_{1-5}$ alcohol, the alcohol mentioned for Method (i) may be used.

The amount of the alcohol is, in view of the diluting ratio of the low molecular weight organic compound having at most 20 carbon atoms, preferably from 100 to 1,000 parts by mass, more preferably from 100 to 500 parts by mass, per 100 parts by mass of the water/oil repellent composition (II).

The basic compound may, for example, be sodium hydroxide, potassium hydroxide and ammonia. The basic compound is used usually in the form of an aqueous solution.

The amount of the basic compound is preferably the amount by which the fluorinated polymer can be agglomerated, specifically from 100 to 1,000 parts by mass, more preferably from 100 to 500 parts by mass, per 100 parts by mass of the fluorinated polymer.

Step (b) to (c):

Steps (b) to (c) in Method (ii) are carried out in the same manner as steps (b) to (c) in Method (i).

However, to prevent degradation of HPLC column by the basic compound, the basic compound remained in the liquid phase should be neutralized by adding an acidic compound to the liquid phase obtained by step (b).

The acidic compound may, for example, be hydrochloric acid or sulfuric acid.

By the above-described process for analyzing a low molecular weight organic compound having at most 20 carbon atoms in a water/oil repellent composition of the present invention, it is possible to measure the concentration of the low molecular weight organic compound having at most 20 carbon atoms by means of LC-MS, LC-MS/MS or GC-MS in step (c) in a state where the fluorinated polymer contained in the water/oil repellent composition has been removed by steps (a) and (b). Therefore, the column of liquid chromatograph is free from clogging, or the injection inlet of gas chromatograph is free from contamination, whereby there is no fluctuation in the concentration in every measurement. Thus, it is possible to analyze with high precision the low molecular weight organic compound having at most 20 carbon atoms present in a trace amount in the water/oil repellent composition.

EXAMPLES

Now, the present invention will be described in further detail with reference to Examples, but it should be understood that the present invention is by no means restricted thereto.

<Quantitative determination of PFOA>

Using the following LC-MS/MS, measurement of the concentration (quantitative determination) of PFOA was carried out under the following measuring conditions. For calculation of the quantitative value, a standard addition method was used.

(LC-MS/MS)

HPLC: Nanospace SI-2, manufactured by Shiseido Co., Ltd.
MS/MS: TSQ Quantum Discovery MAX, manufactured by Thermo Fisher Scientific K.K.

(HPLC measuring conditions)

Column: Hypersil GOLD, manufactured by Thermo Fisher Scientific K.K., 2.1 mm x 50 mm, 1.9 $\mu$m
Mobile phase: (liquid A) 0.01 v/v% acetic acid aqueous solution, (liquid B) methanol for LC-MS
Gradient:

TABLE 1

| Time (min) | 0→ | 5→ | 5.1→ | 10→ | 10.1→ | 20 |
|---|---|---|---|---|---|---|
| B (%) | 65 | 65 | 100 | 100 | 65 | 65 |

Measurement completed in 10 minutes, followed by post run (stabilization) up to 20 minutes.

Amount of sample injected: 5.0 $\mu$L
Flow rate: 200 Umin.
Column temperature: 40°C
(MS measuring conditions)
Ionization method: Negative ESI
Spray voltage: 1,500 V
Vaporizer temperature: 100°C
Ion transfer tube temperature: 240°C
Source CID: 0 V
Collision gas: Ar, 1.2 mTorr
Resolution (FWHM): 0.4 Da (unit resolution)
SRM monitor ion: 413.0 → 369.0
Collision Energy: 10 V

<Quantitative determination of PFOA precursors>

Using the following GC-MS, measurement of the concentration (quantitative determination) of volatile PFOA precursors was carried out under the following measuring conditions. For calculation of the quantitative value, a calibration curve method was used.

(GC-MS)

GC: 6890, manufactured by Agilent Technologies
MS: GC mate II, manufactured by JEOL Ltd.

(GC measuring conditions)

Column: Dub-1301 (60 m in length, 0.25 mm in inner diameter, 1 μm in film thickness), manufactured by J&W Scientific Inc.

Column top pressure: 16 psi
Split ratio: 1/50
injection amount: 0.5 μL
Injection inlet temperature: 220°C
Oven temperature: 40°C (2 min)→(10°C/min)→170°C (0 mint)→
(30°C/min)-->250°C (26.3 min)
(MS measuring conditions)
Transfer line temperature: 300°C
Ionization method: Positive EI
Measurement mode: SIM (m/z=55, 69, 77, 95)

[PREPARATION EXAMPLE 1]

Into a glass beaker, 76.6 g of $C_6F_{13}C_2H_4OCOC(CH_3)=CH_2$ (hereinafter referred to as FMA), 13.5 g of stearyl acrylate (hereinafter referred to as STA), 4.1 g of a 3,5-dimethylpyrazole adduct (hereinafter referred to as D-BI) of 2-isocyanatoethyl methacrylate, 25.9 g of a 10% aqueous solution of polyoxyethyleneoleyl ether (about 26 mol adduct of ethylene oxide, hereinafter referred to as PEO-30) as an emulsifier, 5.2 g of a 10% aqueous solution of stearyl trimethylammonium chloride (hereinafter referred to as STMAC), 5.2 g of a 10% aqueous solution of ethylene oxide propylene oxide polymer (containing 40% of ethylene oxide, hereinafter referred to as EPO-40), 123 g of deionized water, 31.0 g of dipropylene glycol (hereinafter referred to as DPG) and 1.0 g of n-dodecylmercaptan (hereinafter referred to as DoSH) were put and heated at 50°C for 30 minutes, followed by mixing by means of a homomixer (Biomixer, manufactured by Nippon Seiki Co., Ltd.) to obtain a mixed liquid. The obtained mixed liquid was treated under 40 MPa by means of a high pressure emulsifier (Mini-lab, manufactured by APV Rannie) while maintaining it at 50°C to obtain an emulsion. 300 g of the obtained emulsion was put into a stainless steel reactor, and 5.2 g of a 10% aqueous solution of dimethyl 2,2'-azobis[2-(2-imidazolin-2-ylpropane) acetate (hereinafter referred to as VA-061A) as an initiator was added, followed by cooling to not higher than 30°C. The gas phase was substituted by nitrogen, and 9.3 g of vinyl chloride monomer (hereinafter referred to as VCM) was introduced, following by polymerization reaction for 15 hours at 65°C with stirring to obtain an emulsion having a solid content concentration of 34.0 mass%. Such an emulsion was designated as water/oil repellent composition (I-1).

[PREPARATION EXAMPLE 2]

Into a glass beaker, 98.5 g of FMA, 5.5 g of behenyl methacrylate (VMA-70, manufactured by Nippon Nyukazai Co., Ltd., hereinafter referred to as VMA), 32.8 g of a 10% aqueous solution of an acetylene glycol ethylene oxide adduct (addition molar amount of ethylene oxide: 10 mol, hereinafter referred to as AGE-1 0) as an emulsifier, 4.4 g of a 10% aqueous solution of STMAC, 141.6 g of deionized water, 11 g of DPG and 0.55 g of stearyl mercaptan (hereinafter referred to as StSH) were put and heated at 60°C for 30 minutes, followed by mixing by means of a homomixer (Biomixer, manufactured by Nippon Seiki Co., Ltd.) to obtain a mixed liquid. The obtained mixed liquid was treated under 40 MPa by means of a high pressure emulsifier (Mini-lab, manufactured by APV Rannie) while maintaining it at 60°C, to obtain an emulsion. 300 g of the obtained emulsion was put into a stainless steel reactor, and 0.3 g of dimethyl 2,2'-azobis(2-methylpropionate) (hereinafter referred to as V601) as an initiator was added, followed by cooling to not higher than 30°C. The gas phase was substituted by nitrogen, and 5.5 g of VCM was introduced, whereupon polymerization reaction was conducted for 15 hours at 65°C with stirring, followed by stirring at 40°C overnight while introducing nitrogen to obtain an emulsion A having a solid content concentration of 37.2 mass%.

Into a stainless steel autoclave, 204 g of the emulsion A as the first copolymerization composition, 5.4 g of FMA as the second copolymerization composition, 4.4 g of cyclohexyl methacrylate (hereinafter referred to as CHMA) and 3.8 g of glycidyl methacrylate (hereinafter referred to as GMA) were added. Further, 0.15 g of StSH, 1.6 g of DPG and 28.7 g of water were added, and the mixture was stirred for 1 hour at 60°C, followed by cooling to not higher than 30°C and then, 0.05 g of 2,2'-azobis(2-methylbutyronitrile) (hereinafter referred to as V-59) was added. After substituting the gas phase by nitrogen, polymerization was conducted for 15 hours at 65°C. After cooling, 0.02 g of V-59 was added. After substituting the gas phase by nitrogen, a reaction was conducted for 4 hours at 65°C. After cooling, a dispersion was taken out. Its solid content concentration was 36.2 mass%. As a result of a transmission electron microscopy observation of the copolymerization particles, it was found that the first copolymer existed inside of the second copolymer as core-shell fine particles and one polymerized partially in the aqueous phase was also observed. Such a dispersion was designated as water/oil repellent composition (I-2).

[PREPARATION EXAMPLE 3]

Into a glass beaker, 68.9 g of FMA, 10.9 g of diethylaminomethyl methacrylate (hereinafter referred to as DEAEMA), 10.1 g of hydroxyethyl methacrylate (hereinafter referred to as HEMA), 0.77 g of polypropylene glycol dimethacrylate (a 3 mol adduct of propylene glycol, hereinafter referred to as 3ED) and 208.6 g of acetone were added, and then 0.73 g of V601 was added and the gas phase was substituted by nitrogen. The polymerization reaction was conducted at 65°C for 20 hours with stirring, and then 150 g of deionized water and 1.74 g of acetic acid were added, followed by stirring for 30 minutes at 55°C. And then, with stirring, a reduced pressure state of 520 Torr was maintained for 30 minutes at 45°C, and then for 10 hours at 85°C to completely remove acetone from the system. After that, it was adjusted to be a water dispersion having a solid content concentration of 20.6%. Such a dispersion was designated as water/oil repellent composition (II-1).

[PREPARATION EXAMPLE 4]

Into a glass beaker, 76.7 g of FMA, 9.3 g of STA, 4.1 g of D-BI, 32.1 g of a 10% aqueous solution of PEO-30, 9.3 g of a 10% aqueous solution of STMAC, 9.3 g of a 10% aqueous solution of EPO-40, 108 g of deionized water, 31 g of DPG and 1.0 g of DoSH were added and heated at 50°C for 30 minutes, followed by mixing by means of homomixer (Biomixer, manufactured by Nippon Seiki Co., Ltd.) to obtain a mixed liquid. The obtained mixed liquid was treated under 40 MPa by means of a high pressure emulsifier (Mini-lab, manufactured by APV Rannie) while maintaining it at 50°C to obtain an emulsion. 300 g of the obtained emulsion was put into a stainless steel reactor, and 5.2 g of a 10% aqueous solution of VA-061 A was added, followed by cooling to not higher than 30°C. The gas phase was substituted by nitrogen, and 13.5 g of VCM was introduced, followed by polymerization reaction for 15 hours at 65°C with stirring to obtain emulsion B having a solid content concentration of 34.6 mass%.

The emulsion B and the water/oil repellent composition (II-1) were mixed in a ratio of 2 to 1 as calculated as a solid content concentration to obtain a mixed liquid having a solid content concentration of 20%. Such a mixed liquid was designated as water/oil repellent composition (II-2).

<Quantitative determination of PFOA>

[EXAMPLE 1]

Step (a):

4.0 g of 2-propanol (hereinafter referred to as IPA) was collected into a vial container, and then 1.1 g of the water/oil repellent composition (I-1) was added and mixed well thereto, to agglomerate the fluorinated polymer thereby to obtain a liquid containing agglomerates of the fluorinated polymer.

Step (b):

The liquid containing the agglomerates of the fluorinated polymer was centrifuged at 9,000 rpm for 50 minutes for solid-liquid separation.

0.5 mL of the supernatant was collected, and then 4.5 mL of a mixed solvent of methanol/pure water (50/50 mass ratio) was added and mixed well thereto to obtain a sample liquid.

Step (c):

The sample liquid was collected into a HPLC autosampler vial while filtrating it by means of a chromatodisk having a pore diameter of 0.2 $\mu$m, and then the concentration of PFOA in the sample liquid was measured by using LC-MS/MS.

The same operation was repeated again. PFOA was not detected in all measurements (detection lower limit: 2 ppb).

[EXAMPLE 2]

The concentration of PFOA was measured two times in the same manner as in Example 1, except for using the water/oil repellent composition (I-2) instead of the water/oil repellent composition (I-1) and modifying the period of centrifugation to 30 minutes. PFOA was not detected in all measurements (detection lower limit: 2 ppb).

TABLE 2

| | Water/oil repellent composition | | PFOA quantitative determination value (ppb) |
|---|---|---|---|
| Example 1 | (I-1) | First time | Not detected |
| | | Second time | Not detected |
| Example 2 | (I-2) | First time | Not detected |
| | | Second time | Not detected |

[EXAMPLE 3]

Step (a'):

3.2 g of IPA was collected into a vial container, and then 3.2 g of 1 N NaOH was added and mixed well, followed by addition of 3.2 g of the water/oil repellent composition (II-1). The agglomerated fluorinated polymer was stirred well for crushing to obtain a liquid containing the agglomerates of the fluorinated polymer.

Step (b):

The liquid containing the agglomerates of the fluorinated polymer was centrifuged at 6,000 rpm for 10 minutes for solid-liquid separation.
1.674 mL of the supernatant liquid was collected, and then 0.326 mL of 1 N HCl was added and stirred well to obtain a neutralized liquid.
0.5 mL of the neutralized liquid was collected, and then 4.5mL of a mixed solvent of methanol/pure water (50/50 mass ratio) was added and mixed well to obtain a sample liquid.

Step (c):

The sample liquid was collected into a HPLC autosampler vial while filtrating it by means of a chromatodisk having a pore diameter of 0.2 $\mu$m, and then the concentration of PFOA in the sample liquid was measured by using LC-MS/MS.
The same operation was repeated again. PFOA was not detected in all measurements (detection lower limit: 2 ppb).

[EXAMPLE 4]

The concentration of PFOA was measured two times in the same manner as in Example 3, except for using the water/oil repellent composition (II-2) instead of the water/oil repellent composition (II-1) and modifying the condition of centrifugation to 9,000 rpm for 30 minutes. PFOA was not detected in all measurements (detection lower limit: 2 ppb).

TABLE 2

| | Water/oil repellent composition | | PFOA quantitative determination value (ppb) |
|---|---|---|---|
| Example 3 | (II-1) | First time | Not detected |
| | | Second time | Not detected |
| Example 4 | (II-2) | First time | Not detected |
| | | Second time | Not detected |

[EXAMPLES 5 to 8]

Into each of the respective water/oil repellent compositions, PFOA sample was added to a level of 5.0 ppb based on the respective water/oil repellent compositions and the concentration of PFOA was measured in the same manner as in Examples 1 to 4. The obtained measurement results are shown in Table 4.

In all measurements, a quantitative measurement accuracy sufficient for a trace amount analysis was obtained.

TABLE 4

| | Water/oil repellent composition | | PFOA quantitative determination value (ppb) | Average value |
|---|---|---|---|---|
| Example 5 | (I-1) | First time | 6.1 | 6.3 |
| | | Second time | 6.6 | |
| Example 6 | (I-2) | First time | 5.0 | 5.5 |
| | | Second time | 6.0 | |
| Example 7 | (II-1) | First time | 6.0 | 5.1 |
| | | Second time | 4.1 | |
| Example 8 | (II-2) | First time | 5.0 | 4.5 |
| | | Second time | 4.0 | |

[EXAMPLE 9]

By using a commercially available water/oil repellent composition (PM1400, low molecular weight type, perfluoroalkyl sulfamide type urethane compound, manufactured by 3M Co.), the concentration of PFOA was measured in the same manner as in Example 3. PFOA was not detected (detection lower limit: 2 ppb).

TABLE 5

| | Water/oil repellent composition | PFOA quantitative determination value (ppb) |
|---|---|---|
| Example 9 | Commercial product | Not detected |

[REFERENCE EXAMPLES 1 to 6]

In the water/oil repellent composition (II), the fluorinated polymer was not agglomerated only with IPA and NaOH was required for its agglomeration.

A study was made on a solvent which may agglomerate the fluorinated polymer contained in the water/oil repellent composition (II) without requiring NaOH. The obtained results are shown in Table 5.

Only in a case where acetonitrile was used, the fluorinated polymer agglomerated, and the solid-liquid separation was possible.

TABLE 6

| | Ref. Ex. 1 | Ref. Ex. 2 | Ref. Ex. 3 | Ref. Ex. 4 | Ref. Ex. 5 | Ref. Ex. 6 |
|---|---|---|---|---|---|---|
| Solvent | Methanol | Ethanol | IPA | Xylene | THF | AcN |
| Agglomeration | Nil | Nil | Nil | Nil | Nil | Present |
| THF: Tetrahydrofuran, AcN: Acetonitrile | | | | | | |

[COMPARATIVE EXAMPLE 1

Step (a"):

To the water/oil repellent composition (II-1), PFOA sample was added to a level of 5.0 ppb in the water/oil repellent composition.

5 mL of acetonitrile was collected into a vial container, and 1 mL of the water/oil repellent composition (II-1) was added. The agglomerated fluorinated polymer was stirred well for crushing to obtain a liquid containing the agglomerates of the fluorinated polymer.

Step (b):

The liquid containing the agglomerates of the fluorinated polymer was centrifuged for 10 minutes at 6,000 rpm for solid-liquid separation.

0.5 mL of the supernatant was collected, and then 4.5 mL of a mixed solvent of methanol/pure water (50/50 mass ratio) was added and mixed well to obtain a sample liquid.

Step (c):

The sample liquid was collected into a HPLC autosampler vial while filtrating it by means of a chromatodisk having a pore diameter of 0.2 $\mu$m, and then the concentration of PFOA in the sample liquid was measured by using LC-MS/MS.

The quantitative determination value of PFOA was found to be lower than in Example 7, and the quantitative determination accuracy was found to be inferior.

[COMPARATIVE EXAMPLE 2]

The concentration of PFOA was measured in the same manner as in Comparative Example 1, except for using the water/oil repellent composition (II-2) instead of the water/oil repellent composition (II-1) and modifying the centrifugation condition to 9,000 rpm for 30 minutes.

The quantitative determination value of PFOA was found to be lower than in Example 8, and the quantitative determination accuracy was found to be inferior.

TABLE 7

| | Water/oil repellent composition | PFOA quantitative determination value (ppb) |
| --- | --- | --- |
| Comparative Example 1 | (II-1) | 2.6 |
| Comparative Example 2 | (II-2) | 3.0 |

<Quantitative determination of PFOA precursors>

[EXAMPLE 10]

Step (a):

5 mL of IPA was collected into a vial container, and then 1 mL of the water/oil repellent composition (I-1) was added and mixed well thereto, to agglomerate the fluorinated polymer thereby to obtain a liquid containing agglomerates of the fluorinated polymer.

Step (b):

The liquid containing the agglomerates of the fluorinated polymer was centrifuged at 9,000 rpm for 50 minutes for solid-liquid separation.

Step (c):

The supernatant liquid was collected into a GC autosampler vial while filtrating it by means of a chromatodisk having a pore diameter of 0.2 $\mu$m, and then the concentration of PFOA precursors in the sample liquid was measured by using GC-MS. PFOS precursors were not detected in all cases (detection lower limit: 0.1 ppm).

[EXAMPLE 11]

The concentration of PFOA precursors was measured in the same manner as in Example 10 except for using the water/oil repellent composition (I-2) instead of the water/oil repellent composition (I-1) and modifying the period of centrifugation to 30 minutes. PFOA precursors were not detected in all cases (detection lower limit: 0.1 ppm).

[EXAMPLE 12]

Step (a'):

4 mL of IPA was collected into a vial container, and then 3 mL of 1 N NaOH was added and mixed well, followed by addition of 3 mL of the water/oil repellent composition (II-1). The agglomerated fluorinated polymer was stirred well for crushing to obtain a liquid containing agglomerates of the fluorinated polymer.

Step (b):

The liquid containing the agglomerates of the fluorinated polymer was centrifuged at 6,000 rpm for 10 minutes for solid-liquid separation.

Step (c):

The supernatant liquid was collected into a GC autosampler vial while filtrating it by means of a chromatodisk having a pore diameter of 0.2 $\mu$m, and then the concentration of PFOA precursors in the sample liquid was measured by using GC-MS. PFOA precursors were not detected in all cases (detection lower limit: 0.1 ppm).

[EXAMPLE 13]

The concentration of PFOA precursors was measured in the same manner as in Example 12 except for using the water/oil repellent composition (II-2) instead of the water/oil repellent composition (II-1) and modifying the centrifugation condition to 9,000 rpm for 30 minutes. PFOA precursors were not detected in all cases (detection lower limit: 0.1 ppm).

TABLE 8

| | Water/oil repellent composition | $C_8F_{17}CH_2CH_2OH$ quantitative determination value (ppb) | $C_8F_{17}CH_2CH_2I$ quantitative determination value (ppb) | $C_8F_{17}CH=CH_2$ quantitative determination value (ppb) | $C_8F_{17}I$ quantitative determination value (ppb) |
|---|---|---|---|---|---|
| Ex.10 | (I-1) | Not detected | Not detected | Not detected | Not detected |
| Ex.11 | (I-2) | Not detected | Not detected | Not detected | Not detected |
| Ex.12 | (II-1) | Not detected | Not detected | Not detected | Not detected |
| Ex.13 | (II-2) | Not detected | Not detected | Not detected | Not detected |

INDUSTRIAL APPLICABILITY

The analytical process of the present invention is useful as a process for analyzing a low molecular weight organic compound having at most 20 carbon atoms in a water/oil repellent composition.

**Claims**

1. A process for analyzing a low molecular weight organic compound having at most 20 carbon atoms in a water/oil repellent composition, which comprises the following steps:

   (a) a step of mixing a water/oil repellent composition in which a fluorinated polymer having repeating units based on a compound having a perfluoroalkyl group is dispersed or dissolved in a medium, and a $C_{1-5}$ alcohol, and agglomerating the fluorinated polymer to obtain a liquid containing agglomerates of the fluorinated polymer,
   (b) a step of subjecting the liquid containing the agglomerates of the fluorinated polymer to solid-liquid separation to obtain a liquid phase, and
   (c) a step of measuring the concentration of a low molecular weight organic compound having at most 20 carbon atoms in the liquid phase by means of a liquid chromatograph-mass spectrometer, a liquid chromatograph-tandem mass spectrometer or a gas chromatograph-mass spectrometer.

2. The process for analyzing a low molecular weight organic compound having at most 20 carbon atoms in a water/oil repellent composition according to Claim 1, wherein the above step (a) is the following step (a'):

(a') a step of mixing a water/oil repellent composition in which a fluorinated polymer having repeating units based on a compound having a perfluoroalkyl group and repeating units based on a compound having a basic group is dispersed or dissolved in a medium, a $C_{1-5}$ alcohol, and a basic compound, and agglomerating the fluorinated polymer to obtain a liquid containing agglomerates of the fluorinated polymer.

3. The process for analyzing a low molecular weight organic compound having at most 20 carbon atoms in a water/oil repellent composition according to Claim 1 or 2, wherein the low molecular weight organic compound having at most 20 carbon atoms is a perfluorocarboxylic acid and/or a perfluoroalkane sulfonic acid.

4. The process for analyzing a low molecular weight organic compound having at most 20 carbon atoms in a water/oil repellent composition according to Claim 1 or 2, wherein the low molecular weight organic compound having at most 20 carbon atoms is perfluorooctanoic acid and/or perfluorooctane sulfonic acid.

5. The process for analyzing a low molecular weight organic compound having at most 20 carbon atoms in a water/oil repellent composition according to Claim 1 or 2, wherein the low molecular weight organic compound having at most 20 carbon atoms is a (perfluoroalkyl) ethyl alcohol, a (perfluoroalkyl) ethyl iodide, a (perfluoroalkyl) ethene or a perfluoroalkyl iodide.

6. The process for analyzing a low molecular weight organic compound having at most 20 carbon atoms in a water/oil repellent composition according to Claim 1 or 2, wherein the low molecular weight organic compound having at most 20 carbon atoms is (perfluorooctyl)ethyl alcohol, (perfluorooctyl)ethyl iodide, (perfluorooctyl)ethene or perfluorooctyl iodide.

7. The process for analyzing a low molecular weight organic compound having at most 20 carbon atoms in a water/oil repellent composition according to any one of Claims 1 to 6, wherein 100 to 1,000 parts by mass of the alcohol is mixed per 100 parts by mass of the water/oil repellent composition.

**Patentansprüche**

1. Verfahren zum Analysieren einer organischen Verbindung mit niedrigem Molekulargewicht mit höchstens 20 Kohlenstoffatomen in einer Wasser/Ölabweisenden Zusammensetzung, welches die folgenden Schritte umfaßt:

(a) einen Schritt des Mischens einer Wasser/Öl-abweisenden Zusammensetzung, worin ein fluoriertes Polymer mit wiederkehrenden Einheiten, basierend auf einer Verbindung mit einer Perfluoralkylgruppe, in einem Medium dispergiert oder gelöst wird, und eines $C_{1-5}$ Alkohols und Agglomerieren des fluorierten Polymers unter Erhalten einer Flüssigkeit, enthaltend Agglomerate des fluorierten Polymers,
(b) einen Schritt des Unterwerfens der Flüssigkeit, enthaltend die Agglomerate des fluorierten Polymers, einer Fest-Flüssig-Trennung unter Erhalten einer flüssigen Phase und
(c) einen Schritt des Messens der Konzentration einer organischen Verbindung mit niedrigem Molekulargewicht mit höchstens 20 Kohlenstoffatomen in der flüssigen Phase mittels eines Flüssigkeitschromatograph-Massenspektrometers, eines Flüssigkeitschromatograph-Tandem-Massenspektrometers oder eines Gaschromatograph-Massenspektrometers.

2. Verfahren zum Analysieren einer organischen Verbindung mit niedrigem Molekulargewicht mit höchstens 20 Kohlenstoffatomen in einer Wasser/Ölabweisenden Zusammensetzung gemäß Anspruch 1, wobei der vorstehende Schritt (a) der folgende Schritt (a') ist:

(a') ein Schritt des Mischens einer Wasser/Öl-abweisenden Zusammensetzung, worin ein fluoriertes Polymer mit wiederkehrenden Einheiten, basierend auf einer Verbindung mit einer Perfluoralkylgruppe, und wiederkehrenden Einheiten, basierend auf einer Verbindung mit einer basischen Gruppe, in einem Medium dispergiert oder gelöst wird, eines $C_{1-5}$ Alkohols und einer basischen Verbindung und Agglomerieren des fluorierten Polymers unter Erhalten einer Flüssigkeit, enthaltend Agglomerate des fluorierten Polymers.

3. Verfahren zum Analysieren einer organischen Verbindung mit niedrigem Molekulargewicht mit höchstens 20 Kohlenstoffatomen in einer Wasser/Ölabweisenden Zusammensetzung gemäß Anspruch 1 oder 2, wobei die organische Verbindung mit niedrigem Molekulargewicht mit höchstens 20 Kohlenstoffatomen eine Perfluorcarbonsäure und/ oder eine Perfluoralkansulfonsäure ist.

4. Verfahren zum Analysieren einer organischen Verbindung mit niedrigem Molekulargewicht mit höchstens 20 Kohlenstoffatomen in einer Wasser/Ölabweisenden Zusammensetzung gemäß Anspruch 1 oder 2, wobei die organische Verbindung mit niedrigem Molekulargewicht mit höchstens 20 Kohlenstoffatomen Perfluoroctansäure und/oder Perfluoroctansulfonsäure ist.

5. Verfahren zum Analysieren einer organischen Verbindung mit niedrigem Molekulargewicht mit höchstens 20 Kohlenstoffatomen in einer Wasser/Ölabweisenden Zusammensetzung gemäß Anspruch 1 oder 2, wobei die organische Verbindung mit niedrigem Molekulargewicht mit höchstens 20 Kohlenstoffatomen ein (Perfluoralkyl)ethylalkohol, ein (Perfluoralkyl)ethyliodid, ein (Perfluoralkyl)ethen oder ein Perfluoralkyliodid ist.

6. Verfahren zum Analysieren einer organischen Verbindung mit niedrigem Molekulargewicht mit höchstens 20 Kohlenstoffatomen in einer Wasser/Ölabweisenden Zusammensetzung gemäß Anspruch 1 oder 2, wobei die organische Verbindung mit niedrigem Molekulargewicht mit höchstens 20 Kohlenstoffatomen (Perfluoroctyl)ethylalkohol, (Perfluoroctyl)ethyliodid, (Perfluoroctyl)ethen oder Perfluoroctyliodid ist.

7. Verfahren zum Analysieren einer organischen Verbindung mit niedrigem Molekulargewicht mit höchstens 20 Kohlenstoffatomen in einer Wasser/Ölabweisenden Zusammensetzung gemäß Anspruch 1 oder 6, wobei 100 bis 1000 Masse-Teile des Alkohols pro 100 Masse-Teilen der Wasser/Ölabweisenden Zusammensetzung gemischt werden.

## Revendications

1. Procédé pour analyser un composé organique à faible masse moléculaire possédant au plus 20 atomes de carbone dans une composition hydrofuge/oléofuge, qui comprend les étapes suivantes :

   (a) une étape de mélange d'une composition hydrofuge/oléofuge dans laquelle un polymère fluoré possédant des unités répétitives basées sur un composé possédant un groupe perfluoroalkyle est dispersé ou dissous dans un milieu, et un alcool en $C_1$ à $C_5$, et d'agglomération du polymère fluoré pour obtenir un liquide contenant des agglomérats du polymère fluoré,
   (b) une étape consistant à soumettre le liquide contenant les agglomérats du polymère fluoré à une séparation solide-liquide pour obtenir une phase liquide, et
   (c) une étape de mesure de la concentration d'un composé organique à faible masse moléculaire possédant au plus 20 atomes de carbone dans la phase liquide au moyen d'un chromatographe en phase liquide - spectromètre de masse, d'un chromatographe en phase liquide - spectromètre de masse en tandem ou d'un chromatographe en phase gazeuse - spectromètre de masse.

2. Procédé pour analyser un composé organique à faible masse moléculaire possédant au plus 20 atomes de carbone dans une composition hydrofuge/oléofuge selon la revendication 1, dans lequel l'étape (a) ci-dessus est l'étape (a') suivants :

   (a') une étape de mélange d'une composition hydrofuge/oléofuge dans laquelle un polymère fluoré possédant des unités répétitives basées sur un composé possédant un groupe perfluoroalkyle et des unités répétitives basées sur un composé possédant un groupe basique est dispersé ou dissous dans un milieu, un alcool en $C_1$ à $C_5$, et un composé basique, et d'agglomération du polymère fluoré pour obtenir un liquide contenant des agglomérats du polymère fluoré.

3. Procédé pour analyser un composé organique à faible masse moléculaire possédant au plus 20 atomes de carbone dans une composition hydrofuge/oléofuge selon la revendication 1 ou 2, dans lequel le composé organique à faible masse moléculaire possédant au plus 20 atomes de carbone est un acide perfluorocarboxylique et/ou un acide perfluoroalcane-sulfonique.

4. Procédé pour analyser un composé organique à faible masse moléculaire possédant au plus 20 atomes de carbone dans une composition hydrofuge/oléofuge selon la revendication 1 ou 2, dans lequel le composé organique à faible masse moléculaire possédant au plus 20 atomes de carbone est l'acide perfluoroalcanoïque ou l'acide perfluorooctane-sulfonique.

5. Procédé pour analyser un composé organique à faible masse moléculaire possédant au plus 20 atomes de carbone dans une composition hydrofuge/oléofuge selon la revendication 1 ou 2, dans lequel le composé organique à faible masse moléculaire possédant au plus 20 atomes de carbone est un alcool (perfluoroalkyl)éthylique, un iodure de (perfluoroalkyl)éthyle, un (perfluoroalkyl)éthène ou un iodure de perfluoroalkyle.

6. Procédé pour analyser un composé organique à faible masse moléculaire possédant au plus 20 atomes de carbone dans une composition hydrofuge/oléofuge selon la revendication 1 ou 2, dans lequel le composé organique à faible masse moléculaire possédant au plus 20 atomes de carbone est l'alcool (perfluorooctyl)éthylique, l'iodure de (perfluorooctyl)éthyle, le (perfluorooctyl)éthène ou l'iodure de perfluorooctyle.

7. Procédé pour analyser un composé organique à faible masse moléculaire possédant au plus 20 atomes de carbone dans une composition hydrofuge/oléofuge selon l'une quelconque des revendications 1 à 6, dans lequel 100 à 1 000 parties en masse de l'alcool sont mélangées pour 100 parties en masse dé la composition hydrofuge/oléofuge.

# Fig. 1

12: IONIZATION CHAMBER
16: IMPACT DISSOCIATION CHAMBER
20: DETECTOR

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007247096 A

- US 4990458 A

**Non-patent literature cited in the description**

- **Hisao Nakata et al.** development of simultaneous analyses of organic fluoro compounds in human blood plasma by means of online solid phase extraction-high performance liquid chromatography/tandem mass spectrometer. *Analytical Chemistry, Japan Society for Analytical Chemistry,* 2005, vol. 54 (9), 877-884

- **Nobutsune Katsumata et al.** Quantitative analysis of perfluoro compounds in house dust by means of super critical fluid-high performance liquid chromatography/tandem mass spectrometry. *analytical chemistry, Japan Society for Analytical Chemistry,* 2006, vol. 55 (12), 955-961
- **Marta Villagrasa.** *Analytical and Bioanalytical Chemistry,* vol. 386 (4), 953-972
- **Mawn.** *Analyst,* vol. 130, 670-678